# DEMANDE DE BREVET EUROPEEN

(11) **EP 2 689 825 A1**
(43) Date de publication de la demande: **29.01.2014**
(21) Numéro de dépôt: 13177707.0
(22) Date de dépôt: 23.07.2013
(51) Int. Cl.: B01D 53/88

(54) **Dispositif de photocatalyse pour la purification d'effluents industriels gazeux**

(30) Priorité: 23.07.2012 FR 1257139
(71) Demandeur: Tourasse, Andre, 69390 Millery (FR); Bal, Caroline, 69290 Grezieu La Varenne (FR)
(72) Inventeur: Tourasse, Andre, 69390 Millery (FR); Bal, Caroline, 69290 Grezieu La Varenne (FR)
(74) Mandataire: Tripoz, Inès

(57) **Abrégé**

La présente invention concerne un dispositif de photocatalyse pour réduire la teneur en polluants d'effluents industriels caractérisé en ce qu'il comprend un réacteur contenant un photocatalyseur ledit photocatalyseur étant fixé sur un support sous forme divisée ou granulaire, libre dans le corps du réacteur mais ne présentant pas un comportement de fluide lorsqu'il est soumis à une injection de gaz.

## Description

L'invention concerne un procédé de purification d'effluents industriels gazeux par photocatalyse.

La présente invention a plus particulièrement trait à la purification d'effluents industriels gazeux.

Les procédés les plus performants sont actuellement les systèmes par photocatalyse qui sont utilisés par exemple pour la purification de l'air ambiant.

Mais les effluents gazeux industriels en raison de leurs teneurs élevées en polluants et de la situation de leurs lieux d'émission, en général de cheminées industrielles à grande hauteur, présentent des difficultés particulières pour la mise en place de systèmes de dépollution.

La photocatalyse ou réaction photocatalytique permet de détruire les différents polluants organiques et/ou inorganiques présents dans les effluents gazeux, notamment les effluents industriels par réaction photochimique initiée par irradiation d'un catalyseur par des rayons ultraviolets(UV).

La réaction photocatalytique est initiée par l'activation d'un photocatalyseur, l'oxyde de titane (TiO2) par des rayonnements UV à une longueur d'onde inférieure à 300 nm, photocatalyseur à la surface duquel les substances polluantes sont adsorbées pour être oxydées.

Les substances polluantes sont ainsi oxydées et se dégradent en H2O et CO2.

La présente invention se rapporte plus particulièrement au traitement d'effluents pouvant comporter des substances telles que des composés aromatiques et/ou alkyles saturés ou insaturés linéaires et/ou cycliques comme le benzène, le n-hexane, l'heptanal et le cyclohexane.

L'agent photocatalyseur le plus utilisé pour initier la réaction photocatalytique est le TiO2, lequel activé par le rayonnement UV conduira à la formation de radicaux hydroxyles OH• et d'oxygène O• capables de dégrader les chaînes carbonées des composés organiques adsorbés sur le TiO2 jusqu'à transformation en dioxyde de carbone. D'autres agents photocatalyseurs peuvent être utilisés, par exemple des oxydes métalliques, des oxydes d'actinides ou de terres rares comme les oxydes de silicium, d'étain, de zirconium, de zinc, de tungstène, de molybdène, de vanadium, de platine, de palladium de niobium et de ruthénium seuls ou en mélange.

En général, les agents photocatalyseurs sont fixés au moyen d'agents liants sur des supports par des moyens classiques et les supports utilisés sont en général des supports de type fibreux qui servent à la fois de filtres et de supports pour les catalyseurs voir par exemple la demande PCT/FR99/00748.

D'autres systèmes comme ceux décrits dans les demandes W02007/076134 et WO2009/144764 sont des systèmes dans lesquels le catalyseur est sous forme de matériau granulaire ou est déposé sur un matériau granulaire qui permet d'appliquer la technique du lit fluidisé. Cette technique bien connue et largement appliquée dans les réacteurs pour la catalyse hétérogène permet en injectant un gaz à la base d'un récipient contenant un matériau granulaire de lui faire adopter un comportement de fluide.

Si ce comportement est un avantage dans un réacteur classique, il peut devenir un problème car une déstabilisation peut survenir mais surtout des problèmes de colmatage qui sont à éviter absolument dans un système placé sur une cheminée par exemple.

Le traitement théorique de tels systèmes est très complexe. En effet, les phénomènes turbulents et l'extrême dépendance du système aux moindres variations rendent très difficile toute approche non-statistique. On ne peut en général pas prédire son comportement mais seulement le décrire. Une meilleure compréhension serait très utile pour mieux maitriser les fluctuations, parfois chaotique, des lits fluidifiés, qui rendent leur utilisation dans des systèmes utilisé sur des effluents gazeux pouvant présenter un danger.

Dans le cas particulier des effluents gazeux industriels comme précisé ci-dessus des problèmes particuliers existent qui empêchent l'utilisation des systèmes classiques.

Le premier problème est la concentration élevée en polluants qui même avec un rendement exceptionnel du dispositif de dépollution ne permet pas toujours d'abaisser la concentration en lesdits polluants au-dessous des seuils critiques comme les LIE (Limite Inférieure d'Explosivité). Cette contrainte de concentration en sortie de dispositif de dépollution implique éventuellement des dilutions des effluents à l'entrée des dispositifs mais également l'utilisation de dispositifs placés en série ou en parallèle.

Le deuxième problème est la température de fonctionnement qui impose d'éventuels moyens de refroidissement, qui entraînent à leur tour d'autres inconvénients comme des phénomènes de condensation.

Le troisième problème est l'impossibilité d'utiliser des supports qui peuvent présenter des risques de colmatage, en effet même avec des systèmes de sécurité en cas de surpression compte tenu des teneurs en polluants toute accumulation d'effluents dans le dispositif est à proscrire. Pour la même raison le remplissage servant de support aux agents photocatalyseurs doit tout en permettant un contact intime entre le photocatalyseur et les polluants contenus dans les effluents ne pas entraîner de perte de charge dans le dispositif incompatible avec le fonctionnement des cheminées sur lesquelles il est placé.

Des dispositifs de l'art antérieur présentant ces risques de colmatage sont par exemple décrits dans DE102007040397 qui enseigne un dispositif en lit fluidisé dans lequel la surface spécifique des particules de support de catalyseur est la caractéristique technique travaillée pour favoriser la photocatalyse. Cependant dans un tel dispositif la forme et le volume des particules entrainent un risque élevé de colmatage.

Le quatrième problème est le poids et l'encombrement des dispositifs qui placés sur des supports de type plateforme en haut des cheminées doivent être compacts pour ne pas présenter une prise au vent trop importante et peu denses et légers pour ne pas surcharger les plateformes sur lesquels ils sont installés.

De façon surprenante les inventeurs ont mis en évidence qu'un dispositif dont le support de photocatalyseur était sous forme divisée, libre dans le corps du réacteur, mais ne présentant pas un comportement de fluide lorsqu'il est soumis à une injection de gaz, permettait de résoudre l'ensemble des problèmes ci-dessus cités, sans présenter les inconvénients des procédés en lit fluidisé.

Dispositif de photocatalyse pour réduire la teneur en polluants d'effluents industriels caractérisé en ce qu'il comprend un réacteur contenant un photocatalyseur ledit photocatalyseur étant fixé sur un support sous forme divisée ou granulaire, libre dans le corps du réacteur mais ne présentant pas un comportement de fluide lorsqu'il est soumis à une injection de gaz.

Pour éviter ce comportement de fluide du matériau particulaire, tout en conservant les avantages de la surface spécifique, les inventeurs ont constaté que les grains de support devaient avoir un diamètre équivalent supérieur à environ 3 mm.

On appelle « diamètre équivalent » le diamètre de la sphère qui se comporterait de manière identique lors de l'opération d'analyse granulométrique.

Dans un mode de réalisation les grains de support ont un diamètre équivalent supérieur à 3 mm

. Dans un mode de réalisation les grains de support ont un diamètre équivalent compris entre 4 et 10 mm.

Dans un mode de réalisation le support du photocatalyseur est une bille d'un diamètre compris entre 4 et 10 mm.

Dans un mode de réalisation le support est un support inerte constitué d'une bille en un minéral inerte chimiquement, naturel ou synthétique.

Dans un mode de réalisation le minéral est microporeux.

Dans un mode de réalisation le minéral appartient au groupe des silicates ou des aluminosilicates.

Dans un mode de réalisation le minéral est une zéolithe, comme par exemple la mordénite.

Dans un mode de réalisation, le photocatalyseur est un oxyde métallique choisi dans le groupe des oxydes métalliques, des oxydes d'actinides ou de terres rares comme les oxydes de silicium, d'étain, de titane, de zirconium, de zinc, de tungstène, de molybdène, de vanadium, de platine, de palladium de niobium et de ruthénium seuls ou en mélange.

Dans un mode de réalisation, le photocatalyseur est le dioxyde de titane.

Le photocatalyseur est déposé par des techniques connues de l'homme de l'art sur les billes de support inerte en une couche comprise entre 1 à 10 µm et/ou 0,5 à 20 g/m2.

Dans un mode de réalisation, le photocatalyseur est déposé sur les billes de support inerte en une couche comprise entre 1 à 5 µm et/ou 0,5 à 15 g/m2.

Dans un mode de réalisation le dioxyde de titane est déposé par des techniques connues de l'homme de l'art sur des billes de zéolithe en une couche comprise entre 1 à 5 µm et/ou 0,5 à 15 g/m2.

Dans un mode de réalisation, le réacteur comprend au moins un volume interne occupé par les grains de support du catalyseur. délimité avec des parois présentant des lumières, que les grains de support de photocatalyseur ne sont pas susceptibles de traverser, mais qui servent de passage aux effluents à traiter.

Dans un mode de réalisation, le réacteur comprend une succession de volumes ainsi délimités et remplis de grains de support de photocatalyseur, contigus ou séparés par des volumes ne comprenant pas de de grains de support de photocatalyseur.

Ces parois permettent tout en évitant un colmatage éventuel des vannes et autres parties du réacteur sur lesquelles les grains pourraient se regrouper, d'éviter le comportement de fluide des grains. Les grains sont en effet tassés entre les deux parois de telle façon qu'il ne puisse pas y avoir d'expansion lors de la mise en circulation des effluents gazeux.

Dans un mode de réalisation lesdites parois sont réalisées à l'aide d'une grille.

Dans un mode de réalisation, lesdites parois sont réalisées à l'aide de grillage.

Dans un mode de réalisation, les parois internes du réacteur sont également revêtues d'une couche de photocatalyseur.

De façon surprenante avec un dispositif selon l'invention les rendements d'épuration sont supérieurs à 60 %.

Dans un mode de réalisation, ils sont supérieurs à 80 %.

Dans un mode de réalisation, ils sont supérieurs à 90 %.

Dans un mode de réalisation, ils sont supérieurs à 95 %.

Dans un mode de réalisation le dispositif selon l'invention, est caractérisé en ce que le réacteur comprend au moins une lampe UV par réacteur.

Dans un mode de réalisation chaque réacteur comprend une lampe placée au centre des réacteurs.

Dans un mode de réalisation chaque réacteur comprend plusieurs lampes placées à la périphérie du réacteur.

Dans un mode de réalisation des moyens de réflexions des rayons UV sont placés à l'intérieur des réacteurs.

Dans un mode de réalisation, la circulation des effluents est assurée par des pompes en amont du dispositif qui vont permettre le passage des effluents à travers le réacteur.

Dans un mode de réalisation, la circulation des effluents est assurée par des turbines qui vont aspirer les effluents à la sortie du réacteur et ainsi permettre le passage des effluents à travers le réacteur.

Dans un mode de réalisation, le dispositif est caractérisé en ce qu'il comporte en amont de l'entrée du réacteur, une vanne permettant la dilution des effluents.

Comme exposé ci-dessus, les concentrations en polluants des effluents industriels sont telles qu'elles impliquent une dilution en amont du réacteur pour assurer en fonction du rendement d'épuration des concentrations en sortie inférieures par exemple à la LIE. Cette dilution sera effectuée par l'apport d'air ou d'un gaz inerte permettant d'abaisser les concentrations moyennes en polluants des effluents introduits dans le réacteur.

L'utilisation d'un gaz inerte, seul ou en mélange avec de l'air est nécessaire lorsque le dispositif selon l'invention est utilisé en zones ATEX (ATmosphères EXplosives, voir directives européennes 94/9/CE ou ATEX 137).

Dans un mode de réalisation le gaz inerte est l'azote.

Dans un mode de réalisation le dispositif selon l'invention, est caractérisé en ce qu'il comprend en amont de l'entrée du réacteur un système de refroidissement des effluents.

Ledit système de refroidissement des effluents est constitué par exemple en une série de tubulures permettant par leur longueur d'abaisser significativement la température des effluents. Il peut s'agir dans un mode de réalisation d'un condenseur à ailettes.

Dans un mode de réalisation le dispositif selon l'invention, est caractérisé en ce qu'il comprend en amont du réacteur un système de condensation des effluents et de purge des liquides ainsi obtenus.

Dans un mode de réalisation le dispositif selon l'invention, est caractérisé en ce qu'il comprend en amont de l'entrée du réacteur un système de filtrage des particules contenues dans les effluents.

Dans un mode de réalisation il peut s'agir de filtres classiques utilisés dans l'industrie. Dans un mode de réalisation les filtres utilisés peuvent être traités chimiquement pour absorber certaines particules ou être constitués au moins en partie de charbon actif.

Dans un mode de réalisation le dispositif selon l'invention, est caractérisé en ce qu'il comprend en amont du réacteur un système de séchage des effluents.

Ledit système de séchage peut être constitué du condenseur ci-dessus décrit mais également de composés tels que des carbonates de calcium ou autres produits desséchants.

Ces étapes préalables de traitement des effluents industriels sont destinées à protéger le photocatalyseur d'un encrassement physique qui pourrait être dû à un phénomène de condensation par exemple dans le réacteur ou au dépôt sur la surface dudit photocatalyseur de particules solides contenues dans les effluents.

Dans un mode de réalisation le dispositif selon l'invention, est caractérisé en ce qu'il comprend au moins un réacteur.

Dans un mode de réalisation le dispositif selon l'invention, est caractérisé en ce qu'il comprend au moins deux réacteurs.

Dans un mode de réalisation le dispositif selon l'invention, est caractérisé en ce que les au moins deux réacteurs sont montés en série.

Dans un mode de réalisation le dispositif selon l'invention, est caractérisé en ce que les au moins deux réacteurs sont montés en parallèle.

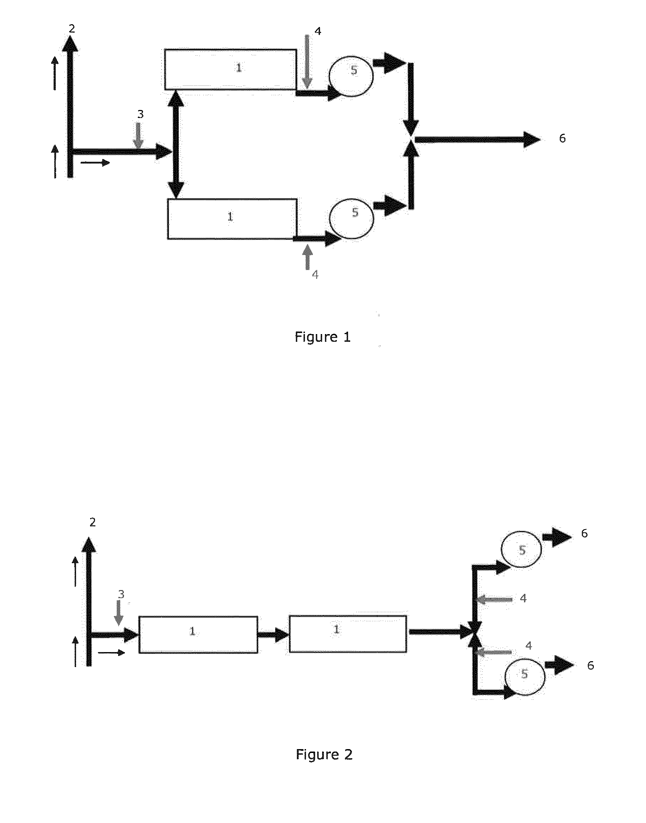

La figure 1 représente schématiquement un dispositif selon l'invention dans lequel deux réacteurs sont montés en parallèle.

La figure 2 représente schématiquement un dispositif selon l'invention dans lequel deux réacteurs sont montés en série.

Sur les deux figures sont représentés schématiquement :

les corps des réacteurs 1,

des évents 2, permettant l'évacuation des effluents en cas de surpression accidentelle,

des vannes de dilution 3,

des moyens de régularisation des pertes de charges 4,

des turbines 5 permettant d'aspirer les effluents,

Les points de rejet des effluents épurés 6.

### Exemple 1 :

Un dispositif selon l'invention a été réalisé avec deux réacteurs cylindriques en inox 316L d'un volume d'environ 30 litres remplis de microbilles de zéolithe de diamètre 6 mm recouvertes de dioxyde de titane. Deux lampes UV de puissance UVc de 107 W ont été placées au centre des réacteurs. La perte de charge induite par le remplissage était inférieure à 250 mBar et le débit admissible était inférieur à 500 m3/h. Le poids total de l'équipement en fonctionnement est d'environ 500 Kg.

Les réacteurs ont été équipés avec des turbines de puissance 7,5 Kw.

Selon les essais les réacteurs ont été utilisés en parallèle ou en série.

Sur une installation pilote les abattements moyens suivants sur les concentrations en polluants ont été obtenus :

### Installation avec deux réacteurs en série :

| Polluants | Concentrations en amont en mg/m³ | Concentrations en aval en mg/m³ | Rendements en % |
|---|---|---|---|
| hexane | 850 | 34 | 96 |
| Benzène | 33 | 2,31 | 93 |
| cyclohexane | 35 | 2,1 | 94 |

## Revendications

1. Dispositif de photocatalyse pour réduire la teneur en polluants d'effluents industriels **caractérisé en ce qu'**il comprend un réacteur contenant un photocatalyseur ledit photocatalyseur étant fixé sur un support sous forme divisée ou granulaire, libre dans le corps du réacteur mais ne présentant pas un comportement de fluide lorsqu'il est soumis à une injection de gaz.

2. Dispositif selon la revendication 1, **caractérisé en ce que** le réacteur comprend au moins un volume interne occupé par les grains de support du catalyseur. délimité avec des parois présentant des lumières, que les grains de support de photocatalyseur ne sont pas susceptibles de traverser, mais qui servent de passage aux effluents à traiter.

3. Dispositif selon la revendication 1, **caractérisé en ce que** les grains de support ont un diamètre équivalent supérieur à 3 mm

4. Dispositif selon la revendication 1, **caractérisé en ce que** le support du photocatalyseur est une bille d'un diamètre compris entre 4 et 10 mm.

5. Dispositif selon l'une des revendications précédentes **caractérisé en ce que** le support est un support inerte constitué d'une bille en un minéral inerte chimiquement, naturel ou synthétique.

6. Dispositif selon l'une quelconque des revendications précédentes, **caractérisé en ce que** le photocatalyseur est un oxyde métallique.

7. Dispositif selon l'une quelconque des revendications précédentes, **caractérisé en ce que** le photocatalyseur est le dioxyde de titane.

8. Dispositif selon l'une quelconque des revendications précédentes, **caractérisé en ce que** le photocatalyseur est déposé sur les billes de support inerte en une couche comprise entre 1 à 10 µm et/ou 0,5 à 20 g/m2.

9. Dispositif selon l'une quelconque des revendications précédentes, **caractérisé en ce que** les parois internes du réacteur sont également revêtues d'une couche de photocatalyseur.

10. Dispositif selon l'une quelconque des revendications précédentes, **caractérisé en ce que** le réacteur comprend au moins une lampe UV.

11. Dispositif selon l'une quelconque des revendications précédentes, **caractérisé en ce que** le dispositif comporte en amont de l'entrée du réacteur une vanne permettant la dilution des effluents.

12. Dispositif selon l'une quelconque des revendications précédentes, **caractérisé en ce qu'**il comprend en amont de l'entrée du réacteur un système de refroidissement des effluents.

13. Dispositif selon l'une quelconque des revendications précédentes, **caractérisé en ce qu'**il comprend en amont de l'entrée du réacteur un système de filtrage des particules contenues dans les effluents.

14. Dispositif selon l'une quelconque des revendications précédentes, **caractérisé en ce qu'**il comprend en amont du réacteur un système de séchage des effluents.

15. Dispositif selon l'une quelconque des revendications précédentes, **caractérisé en ce qu'**il comprend en amont du réacteur un système de condensation des effluents et de purge des liquides ainsi obtenus.

16. Dispositif selon l'une quelconque des revendications précédentes, **caractérisé en ce qu'**il comprend au moins un réacteur.

17. Dispositif selon l'une quelconque des revendications précédentes, **caractérisé en ce qu'**il comprend au moins deux réacteurs.

18. Dispositif selon la revendication 13, **caractérisé en ce que** les au moins deux réacteurs sont montés en série.

19. Dispositif selon la revendication 13, **caractérisé en ce que** les au moins deux réacteurs sont montés en parallèle.
